# EUROPÄISCHE PATENTSCHRIFT

(11) **EP 1 886 943 B1**
(45) Veröffentlichungstag und Bekanntmachung des Hinweises auf die Patenterteilung: **18.03.2009**
(21) Anmeldenummer: 07113676.6
(22) Anmeldetag: 02.08.2007
(51) Int. Cl.: B65G 1/137

(54) **Kommissionierstation**
Picking station
Poste de préparation de commandes

(30) Priorität: 07.08.2006 DE 102006036767
(43) Veröffentlichungstag der Anmeldung: 13.02.2008
(73) Patentinhaber: Dematic GmbH, 63073 Offenbach am Main (DE)
(72) Erfinder: Stehr, Peter, 63179 Obertshausen (DE)
(74) Vertreter: Moser & Götze

(56) Entgegenhaltungen:
- EP-A- 0 048 832
- EP-A- 1 331 179
- EP-A- 1 452 462
- WO-A-20/05066046
- DE-A1- 3 440 010
- DE-U1- 8 806 740
- JP-A- 4 116 001

## Beschreibung

Die Erfindung betrifft eine Kommissionierstation für die manuelle Kommissionierung von Artikeln mit einem Arbeitsplatz für den Kommissionierer, mit mindestens einem Kommissionierplatz für den zu befüllenden Kommissionierbehälter und mit um den Arbeitsplatz herum angeordneten Ablageplätzen für Lagerbehälter für die Entnahme der zu kommissionierenden Artikel.

Kommissionieren ist das Sammeln von Artikeln aus einem Lagersortiment und deren Zusammenstellung zu einem Auftrag. Man kennt das Kommissionieren von absatzorientierten Kundenaufträgen und auch innerbetrieblichen Aufträgen.

Beim Kommissionieren können Kommissionierer einerseits die Artikel aus dem Lager zusammensuchen, wobei sie die statisch im Lager gelagerten Artikel heraussuchen. Man spricht hierbei vom "Mann zur Ware" Prinzip, da der Kommissionierer die Artikel "zu Fuß" zusammenstellt.

Beim Kommissionieren können andererseits aber auch die Artikel aus dem Lager zum Kommissionierer gebracht werden. Man spricht hierbei vom "Ware zum Mann" Prinzip. Hierbei werden bevorzugt Systeme mit dynamischer Artikelbereitstellung eingesetzt, in denen der Kommissionierer einen ortsfesten Arbeitsplatz in einer Kommissionierstation besetzt und dort mit Artikeln versorgt wird. Meist werden die Artikel in Lagerbehältern bereitgestellt, die eine Vielzahl gleicher Artikel enthalten.

Dabei wird der mit den Artikeln zu befüllende Kommissionierbehälter auf einen Kommissionierplatz abgestellt und dort mit den Artikeln befüllt. An diesen oft als Basisstation bezeichneten Arbeitsplätzen sind zudem Hilfsmittel für den Kommissionierer vorgesehen, wie z. B. eine Computerunterstützung, Scanner usw. Dabei ist es bekannt, um den Arbeitsplatz herum Ablageplätze für Lagerbehälter für die Ablage und/oder Entnahme von den zu kommissionierenden Artikeln anzuordnen.

Eine solche Kommissionierstation wird z. B. von der Firma Bito (www.bito.de) unter der Bezeichnung "Bito-Kompakt-Sorter" vertrieben. Bei dieser Kommissionierstation ist der Arbeitsplatz des Kommissionierers als Basisstation mit einem Kommissionierplatz für den zu füllenden Behälter und mit einer Computerunterstützung ausgestaltet.

Links und rechts sind Ablageplätze für Lagerbehälter für die Entnahme der zu kommissionierenden Artikel angeordnet. Durch die U-förmige Anordnung der Basisstation und der Ablageplätze wird ein gewisser Grad an Ergonomie erreicht, da die für den Kommissionierer zurückzulegenden Wege verkürzt sind.

Die Ablageplätze dienen auch für die Ablage des Kommissionierbehälters nach vollendeter Kommissionierung eines Auftrags. Die Ablageplätze werden bei dieser Kommissionierstation manuell mit den Behältern (Kommissionierbehälter und Lagerbehälter) bestückt bzw. entleert.

Es sind ferner Kommissionierstationen bekannt, die automatisch mit Behältern (Kommissionierbehälter und Lagerbehälter) versorgt, also bestückt bzw. entleert werden. Hierbei ist jeweils links und rechts vom Kommissionierer, also dessen Arbeitsplatz, z. B. Basisstation, ein Behälterhandhabungsgerät im Einsatz.

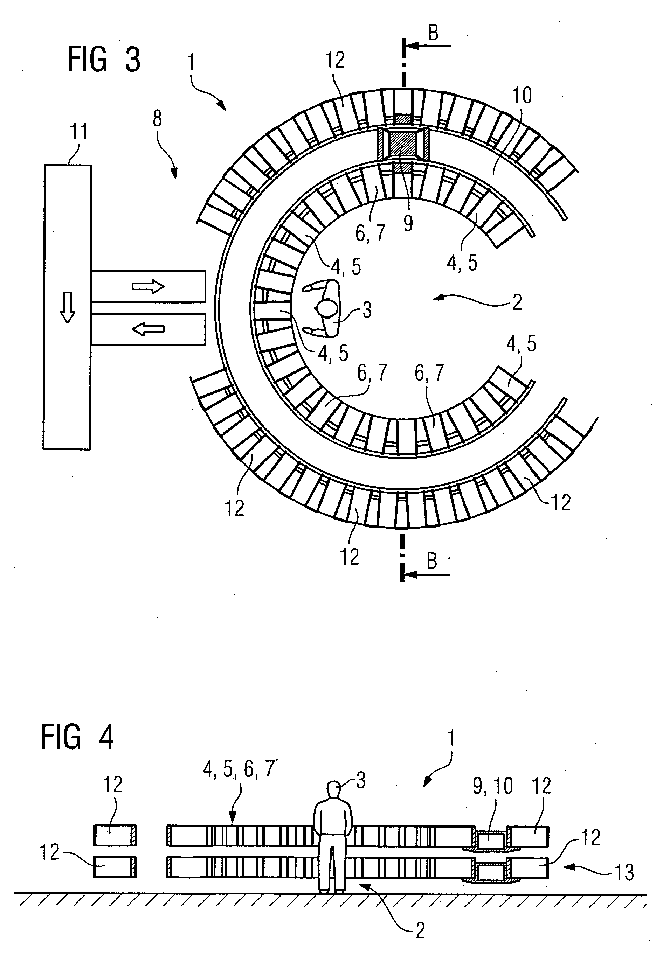

Daneben sind Kommissionierstationen bekannt, bei denen zu befüllende Kommissionierbehälter automatisch zugeführt werden. Diese werden dann manuell auf den Kommissionierplatz abgestellt und mit Artikeln aus Lagerbehälter mit den zu kommissionierenden Artikel zur Durchführung der Kommissionierung befüllt. Die Kommissionierbehälter werden nach vollendeter Kommissionierung manuell auf eine Abtransporteinrichtung (z. B. Förderband) gestellt. Auch hier sind also an jeder Seite des Arbeitsplatzes jeweils eine Transporteinrichtung vorgesehen (vgl. Vanderlande Industries, ODS Station, Hebezeuge und Fördermittel, Berlin 41, 2001, S. 186, Abb. 4).

Aus der DE 34 40 010 A1 ist insbesondere aus den Figuren 2 und 3 eine Kommissionierstation für die manuelle Kommissionierung von Artikeln bekannt, bei der die zu befüllenden Kommissionierbehälter und Lagerbehälter um den Arbeitsplatz herum so angeordnet sind, dass man in die zumindest einseitig offenen Lagerkästen greifen kann. Die Anordnung entspricht dabei in etwa einem Teilkreis.

Aus der EP 1 452 462 A2 ist ein Kommissioniersystem bekannt, bei dem ein Kommissionierarbeitsplatz (vgl. Figur 4 oder Figur 11) so angeordnet ist, dass jeweils ein Lagerbehälter und ein Auftragsbehälter etwa im rechten Winkel zueinander dem Kommissionierer präsentiert werden.

Aufgabe der Erfindung ist es eine Kommissionierstation für die manuelle Kommissionierung von Artikeln bereitzustellen, die besonders ergonomisch ausgestaltet ist und dabei trotzdem einfach aufgebaut ist. Insbesondere soll die Kommissionierstation auf einfache Weise sowohl mit Lagerbehältern als auch mit Kommissionierbehältern ver-und entsorgt werden und eine flexible Verwendung der vorhandenen Plätze erlauben.

Diese Aufgabe wird durch die in Anspruch 1 angegebene Kommissionierstation gelöst.

Erfindungsgemäß ist vorgesehen, dass die Plätze, also Kommissionierplätze und Ablageplätze, jeweils wahlweise als Kommissionierplatz oder Ablageplatz verwendbar ausgestaltet sind. Es kann also jeder Platz als Ablageplatz für einen Lagerbehälter oder als Kommissionierplatz für einen Kommissionierbehälter dienen. Somit ist eine flexible Verwendung der vorhandenen Plätze möglich, was eine Anpassung an die jeweilige Auftragslage und das Sortiment der Artikel ermöglicht.

Sinnvollerweise sind eine Mehrzahl von Kommissionierplätzen vorgesehen.

Da mehrere Behälter im Direktzugriff des Kommissionierers sind, kann dem Kommissionierer auch eine Sortierfunktion (Sequenzbildung) übertragen werden. Dies erlaubt einen Verzicht auf die sonst notwendige Technik für eine Sequenzbildung.

In einer weiteren bevorzugten Ausgestaltung ist ein einziges automatisches Transportsystem für die Ver- und Entsorgung des mindestens einen Kommissionierplatzes vorgesehen. Besonders bevorzugt ist es ferner, wenn dieses automatische Transportsystem auch für die Ver- und Entsorgung der Ablageplätze vorgesehen ist. Somit ist nur ein einziges System für die Ver- und Entsorgung der Plätze mit Behältern notwendig, was den Aufbau vereinfacht und Kosten senkt sowie Platz spart im Vergleich zu den bekannten Kommissionierstationen mit zwei oder mehreren Transportsystemen.

Günstig ist es dabei, wenn das automatische Transportsystem ausgestaltet ist, um die Kommissionierplätze und Ablageplätze von der dem Arbeitsplatz abgewandten Seite her mit/von Behältern zu ver- und entsorgen. Dies erlaubt eine einfache Konstruktion, z. B. als auf gleicher Ebene mit den Plätzen angeordnete Schienenanordnung.

Vorzugsweise umfasst das automatische Transportsystem ein Behältertransportfahrzeug, das in der Lage ist, sich auf teilkreisförmigen Fahrstrecken zu bewegen. Da die Kommissionierplätze und Ablageplätze teilkreisförmig angeordnet sind, ist es daher vorzugsweise vorgesehen, dass auch das Behältertransportfahrzeug teilkreisförmig um die Behälteranordnung herum fährt. Das Behältertransportfahrzeug übernimmt also die Zufuhr und Abfuhr der jeweiligen Behälter zu und von den Plätzen. Das Behältertransportfahrzeug ist auch in der Lage sich auf geraden Fahrstrecken zu bewegen.

Sinnvollerweise ist ein Förderer für die Ver- und Entsorgung des Behältertransportfahrzeugs mit/von Behältern vorgesehen. Dieser kann z. B. die Lagerbehälter aus dem Lagerbereich zur Kommissionierstation bringen oder die fertig kommissionierten Behälter zum Versand abtransportieren. Der Förderer verbindet also ggf. die Kommissionierstation mit dem logistischen Gesamtsystem.

Die Kommissionierstation kann zusätzlich an der dem Arbeitsplatz abgewandten Seite des automatischen Transportsystems Zwischenlagerplätze aufweisen, die teilkreisförmig angeordnet sind. Dabei ist es von Vorteil, wenn die Zwischenlagerplätze konzentrisch zu den Kommissionierplätzen und Ablageplätzen angeordnet sind.

Dadurch ist es möglich, die Kommissionierstation von anderen Teilen des logistischen Gesamtsystems zu entkoppeln. Die zwischengelagerten Behälter können zudem zeitnah durch Umlagerung von den Zwischenlagerplätzen auf die dem Arbeitsplatz zugewandten Ablage- oder Kommissionierplätzen für den Direktzugriff bereitgestellt werden.

Das automatische Transportsystem kann dann ausgestaltet sein, um zusätzlich die Zwischenlagerplätze von der dem Arbeitsplatz zugewandten Seite her mit/von Behältern zu ver- und entsorgen.

Da die Kommissionierplätze und Ablageplätze sowie Zwischenlagerplätze teilkreisförmig und konzentrisch zueinander angeordnet sind, ist es sinnvoll, wenn das Behältertransportfahrzeug auf einer konzentrisch zwischen den Kommissionier- und Ablageplätzen sowie Zwischenlagerplätzen angeordneten Fahrstrecke fährt.

Die Kommissionierstation kann zusätzlich eine Basisstation für den Arbeitsplatz aufweisen, die ggf. mit eigenem Förderer für Ver- und Entsorgung mit Lager- und/oder Kommissionierbehältern vorgesehen ist. So kann eine weitere Leistungssteigerung erreicht werden. Die so angelieferten Behälter verbleiben auf dem Zuführförderer und werden nach Entnahme bzw. Ablage von Artikeln wieder abtransportiert.

Um eine besonders effektive Raumausnutzung zu erreichen, kann vorgesehen sein, dass zwei oder mehrere Platzanordnungen übereinander angeordnet sind.

Die Kommissionierstation hat einen skalierbaren Aufbau, so dass eine Anpassung an sich ändernde Anforderungen möglich ist.

Weitere Merkmale, Einzelheiten und Vorteile der Erfindung werden anhand der nachfolgenden Beschreibung von Ausführungsbeispielen anhand der Zeichnung erläutert. Es zeigen:
Fig. 1 zeigt eine schematische Draufsicht auf eine erfindungsgemäße Kommissionierstation;
Fig. 2 zeigt einen Schnitt entlang der Linie A-A aus Fig. 1;
Fig. 3 zeigt eine schematische Draufsicht auf eine weitere Ausführungsform einer Kommissionierstation;
Fig. 4 zeigt ein Schnitt entlang der Linie B-B aus Fig. 3;
Fig. 5 zeigt eine schematische Draufsicht auf eine weitere Ausführungsform eine Kommissionierstation und
Fig. 6 zeigt einen Schnitt entlang der Linie C-C aus Fig. 5.

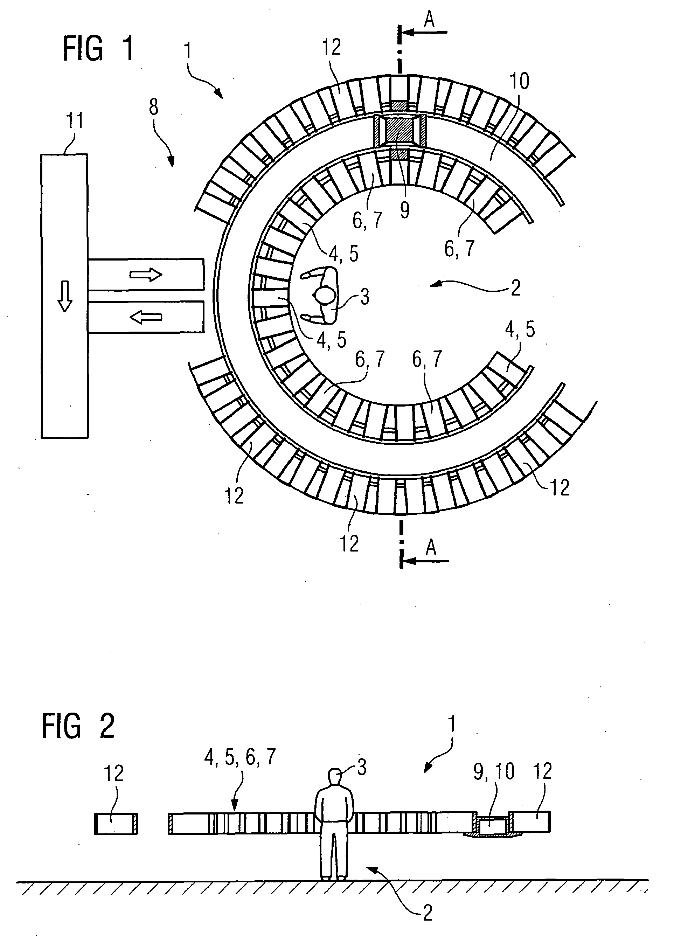

Da die in den Figuren 1 bis 4 gezeigten Kommissionierstationen sich im Wesentlichen entsprechen, werden sie beide mit 1 bezeichnet und gemeinsam besprochen werden.

Die Kommissionierstationen 1 sind für die manuelle Kommissionierung von Artikeln mit einem Arbeitsplatz 2 für den Kommissionierer 3, mit mehreren Kommissionierplätzen 4 für zu befüllende Kommissionierbehälter 5 und mit um den Arbeitsplatz herum angeordneten Ablageplätzen 6 für Lagerbehälter 7 für die Entnahme der zu kommissionierenden Artikel versehen.

Dabei sind die Kommissionierplätze 4 und die Ablageplätze 6 auf einer gemeinsamen Ebene angeordnet, so dass ein ergonomisches Arbeiten für den Kommissionierer 3 gegeben ist.

Die Kommissionierplätze 4 und die Ablageplätze 6 sind teilkreisförmig (vorliegend etwa dreiviertelkreisförmig) um den Arbeitsplatz 2 des Kommissionierers 3 herum angeordnet und dabei untereinander austauschbar, d.h. jeder Platz 4 bzw. 6 kann als Kommissionier- oder Ablageplatz verwendet werden, je nach dem, was für ein Behälter dort angeordnet wird.

Für die Ver- und Entsorgung der Kommissionier- und Ablageplätze 4,6 mit Behältern 5, 7 ist ein einziges automatisches Transportsystem 8 vorgesehen.

Das automatische Transportsystem 8 ist ausgestaltet, um die Plätze 4, 6 von der dem Arbeitsplatz 2 abgewandten Seite her mit/von Behältern 5,7 zu ver- und entsorgen.

Dazu ist ein Behältertransportfahrzeug 9 vorgesehen, das in der Lage ist, sich auf einer teilkreisförmigen Fahrstrecke 10 zu bewegen, die außerhalb Kommissionier-und Ablageplätze 4,6 angeordnet ist.

Das automatische Transportsystem 8 umfasst ferner einen Zuführförderer 11 für die Ver- und Entsorgung des Behältertransportfahrzeugs 9 mit/von Behältern 5,7.

Das Behältertransportfahrzeug 9 übernimmt die Behälter 5,7 von dem Zuführförderer und fährt dann auf der teilkreisförmigen Fahrstrecke 10 zum jeweils vorgegebenen Platz 4,6 und übergibt dort den jeweiligen Behälter 5,7 an den entsprechenden Platz 4,6, wozu es in geeigneter Weise ausgebildet ist. Es kann sich z. B. um ein Shuttle handeln.

In umgekehrter Weise ist auch eine Entsorgung der Plätze 4,6 über das Transportsystem 8 gegeben, z. B. um fertig kommissionierte Kommissionierbehälter 5 abzutransportieren, leere Kommissionierbehälter 5 nachzufüllen oder entleerte Lagerbehälter 7 schrittweise durch mit Artikeln gefüllte Lagerbehälter 7 zu ersetzen.

An der dem Arbeitsplatz 2 abgewandten Seite des automatischen Transportsystems 2 bzw. der teilkreisförmigen Fahrstrecke 10 sind zusätzlich Zwischenlagerplätze 12 teilkreisförmig angeordnet.

Dadurch ist es möglich, die Kommissionierstation 1 von anderen Teilen des logistischen Gesamtsystems zu entkoppeln. Die zwischengelagerten Behälter 5,7 können zudem zeitnah durch Umlagerung von den Zwischenlagerplätzen 12 auf die dem Arbeitsplatz 2 zu gewandten Ablage- oder Kommissionierplätzen 4, 6 für den Direktzugriff bereitgestellt werden.

Das automatische Transportsystem 2 bzw. Behältertransportfahrzeug 9 ist ausgestaltet, um zusätzlich die Zwischenlagerplätze 12 von der dem Arbeitsplatz 2 zugewandten Seite her mit/von Behältern 5, 7 zu ver- und entsorgen.

Die Kommissionierplätze 4 und Ablageplätze 6 sowie Zwischenlagerplätze 12 sind teilkreisförmig und konzentrisch zueinander angeordnet. So fährt auch das Behältertransportfahrzeug 9 auf der konzentrisch zwischen den Kommissionier- und Ablageplätzen sowie Zwischenlagerplätzen angeordneten Fahrstrecke 10.

Die in den Figuren 1 und 2 bzw. 3 und 4 dargestellten Varianten der Kommissionierstation 1 unterscheiden sich lediglich darin, dass in der Variante nach Fig. 3 und 4 eine zweite Ebene 13 unterhalb der ersten Ebene vorgesehen ist, die mit weiteren Kommissionierplätzen 4, Ablageplätzen 6 und Zwischenlagerplätzen 12 sowie einem Transportsystem 8 ausgestattet ist. Die relevanten Teile sind quasi verdoppelt.

Die Kommissionierstation 1 kann somit gemäß dem Artikelsortiment und der Auftragslage skaliert werden.

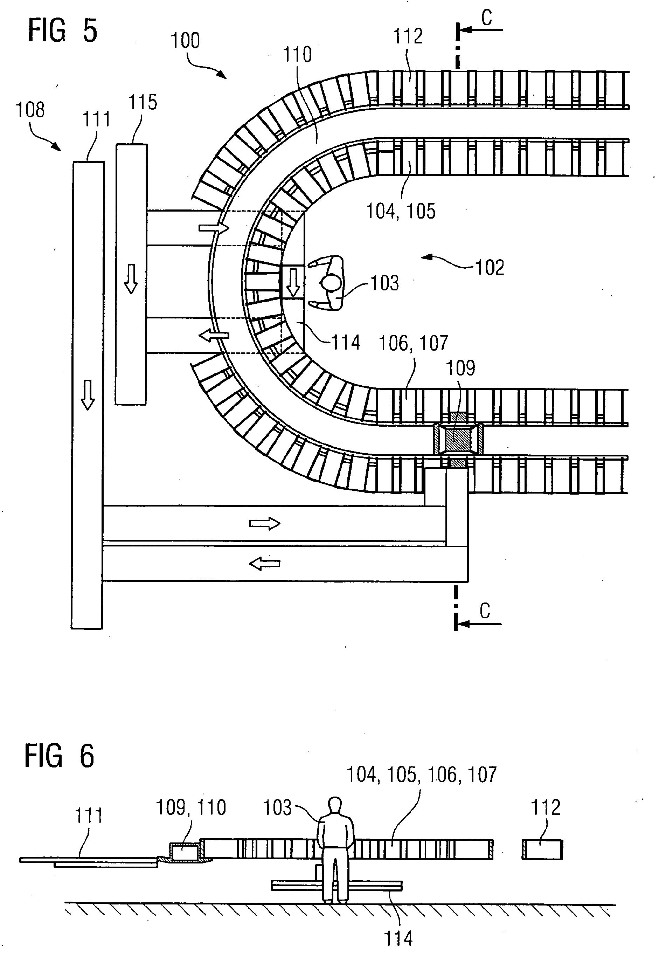

Die in den Figuren 5 und 6 dargestellte weitere Ausführungsform einer Kommissionierstation ist als Ganzes mit 100 bezeichnet.

Die Kommissionierstation entspricht im Wesentlichen ebenfalls dem oben beschriebenen Aufbau, so dass sich entsprechende Teile mit sich entsprechenden, um 100 erhöhte Bezugszeichen bezeichnet werden. Nachfolgend wird daher lediglich auf die relevanten Besonderheiten eingegangen werden.

Im Unterschied zu den beiden vorhergehend beschriebenen Varianten weist die Kommissionierstation 100 eine Basisstation 114 für den Arbeitsplatz 102 auf, die mit eigenem Förderer 115 für Ver- und Entsorgung mit Lager- und/oder Kommissionierbehältern 105, 107 vorgesehen ist.

Die Basisstation 114 und der ihr zugeordnete Zuführförderer 115 sind unterhalb der Ebene angeordnet, in der die Kommissionierplätze 104, Ablageplätze 106 und Zwischenlagerplätze 112 sowie das Transportsystem 108 usw. angeordnet sind.

Somit ist es möglich, den Kommissionierer 103 an seinem Arbeitsplatz 102 im Inneren des Halbkreises mit einer weiteren Möglichkeit zum Empfang oder Versand von Behältern 105, 107 zu versehen.

Die so angelieferten Behälter 105, 107 verbleiben auf dem Förderer 115, benutzen also nicht das Behältertransportfahrzeug 109, und werden nach Entnahme bzw. Ablage von Artikeln wieder abtransportiert. Hierzu ist der Förderer 115 etwa U-förmig ausgebildet und ragt in den Arbeitsplatz 102 des Kommissionierers 103 für den Zugriff auf die "vorbei fahrenden" Behälter, insbesondere Lagerbehälter zur Entnahme von zu kommissionierenden Artikeln, herein.

Ferner sind die Plätze 104, 106 und 112 sowie die Fahrstrecke 110 nicht nur teilkreisförmig angeordnet, sondern umfassen auch jeweils einen geraden Bereich, der sich an dem jeweiligen Ende des Kreisabschnitts anschließt.

### Bezugszeichenliste

- 1, 100: Kommissionierstation
- 2, 102 3, 103: Arbeitsplatz Kommissionierer
- 4, 104: Kommissionierplatz
- 5, 105: Kommissionierbehälter
- 6, 106: Ablageplatz
- 7, 107: Lagerbehälter
- 8, 108 9, 109: Transportsystem Behältertransportfahrzeug
- 10, 110: Fahrstrecke
- 11, 111: Förderer
- 12, 112: Zwischenlagerplatz
- 13: Ebene
- 114: Basisstation
- 115: Förderer

## Patentansprüche

1. Kommissionierstation (1, 100) für die manuelle Kommissionierung von Artikeln mit einem Arbeitsplatz (2, 102) für den Kommissionierer (3, 103), mit mindestens einem Kommissionierplatz (4, 104) für den zu befüllenden Kommissionierbehälter (5, 105) und mit um den Arbeitsplatz (2, 102) herum angeordneten Ablageplätzen (6, 106) für Lagerbehälter (7, 107) für die Entnahme der zu kommissionierenden Artikel, wobei der mindestens eine Kommissionierplatz (4, 104) und die Ablageplätze (6, 106) der Lagerbehälter (7, 107) teilkreisförmig um den Arbeitsplatz (2, 102) des Kommissionierers (3, 103) herum angeordnet sind, **dadurch gekennzeichnet, dass** der mindestens eine Kommissionierplatz (4, 104) und die Ablageplätze (6, 106) jeweils wahlweise als Kommissionierplatz (4, 104) oder Ablageplatz (6, 106) verwendbar ausgestaltet sind.

2. Kommissionierstation nach Anspruch 1, **dadurch gekennzeichnet, dass** ein einziges automatisches Transportsystem (8, 108) für die Ver- und Entsorgung des mindestens einen Kommissionierplatzes (4, 104) mit Kommissionierbehältern (5, 105) vorgesehen ist.

3. Kommissionierstation nach Anspruch 2, **dadurch gekennzeichnet, dass** das automatische Transportsystem (8, 108) für die Ver- und/oder Entsorgung der Ablageplätze (6, 106) mit Lagerbehältern (7, 107) vorgesehen ist.

4. Kommissionierstation nach Anspruch 2 oder 3, **dadurch gekennzeichnet, dass** das automatische Transportsystem (8, 108) ausgestaltet ist, um den mindestens einen Kommissionierplatz (4, 104) und die Ablageplätze (6, 106) von der dem Arbeitsplatz (2, 102) abgewandten Seite her mit/von Behältern (5, 7; 105, 107) zu ver- und entsorgen.

5. Kommissionierstation nach Anspruch 4, **dadurch gekennzeichnet, dass** das automatische Transportsystem (8, 108) ein Behältertransportfahrzeug (9, 109) aufweist, das in der Lage ist, sich auf teilkreisförmigen Fahrstrecken (10, 110) zu bewegen.

6. Kommissionierstation nach Anspruch 5, **dadurch gekennzeichnet, dass** ein Förderer (11, 111) für die Ver- und Entsorgung des Behältertransportfahrzeugs (9, 109) mit/von Behältern (5, 7; 105, 107) vorgesehen ist.

7. Kommissionierstation nach Anspruch 5 oder 6, **dadurch gekennzeichnet, dass** das Behältertransportfahrzeug (9, 109) ausgestaltet ist, um dem mindestens einen Kommissionierplatz (4, 104) und den Ablageplätzen (6, 106) mit/von Behältern (5, 7; 105, 107) zu ver- und entsorgen.

8. Kommissionierstation nach einem der Ansprüche 2-7, **dadurch gekennzeichnet, dass** an der dem Arbeitsplatz (2, 102) abgewandten Seite des automatischen Transportsystems (8, 108) Zwischenlagerplätze (12, 112) teilkreisförmig angeordnet sind.

9. Kommissionierstation nach Anspruch 8, **dadurch gekennzeichnet, dass** die Zwischenlagerplätze (12, 112) konzentrisch zu dem mindestens einen Kommissionerplatz (4, 104) und den Ablageplätzen (6, 106) angeordnet sind

10. Kommissionierstation nach Anspruch 8 oder 9, **dadurch gekennzeichnet, dass** das automatische Transportsystem (8, 108) ausgestaltet ist, um die Zwischenlagerplätze (12, 112) von der dem Arbeitsplatz (2, 102) zugewandten Seite her mit/von Behältern (5, 7; 105, 107) zu ver- und entsorgen.

11. Kommissionierstation nach einem der vorhergehenden Ansprüche,**dadurch gekennzeichnet, dass** eine Basisstation (114) für den Arbeitsplatz (102) vorgesehen ist, die mit eigenem Förderer (115) für Ver- und Entsorgung mit Lager- und/oder Kommissionierbehältern (1.5, 107) vorgesehen ist.

12. Kommissionierstation nach einem der vorhergehenden Ansprüche, **dadurch gekennzeichnet, dass** zwei oder mehrere Platzanordnungen übereinander angeordnet sind.

## Claims

1. Order-picking station (1, 100) for the manual order-picking of articles, having a working location (2, 102) for the order picker (3, 103), having at least one order-picking location for the order-picking container (5, 105) which is to be filled, and having storage locations (6, 106), arranged around the working location (2, 102), for storage containers (7, 107) from which the articles to be order picked are to be taken, the at least one order-picking location (4, 104) and the storage locations (6, 106) for the storage containers (7, 107) being arranged around the working location (2, 102) for the order picker (3, 103) in the form of part of a circle, **characterised in that** the at least one order-picking location (4, 104) and the storage locations (6, 106) are each designed to be able to be used, as desired, as an order-picking location (4, 104) or a storage location (6, 106).

2. Order-picking station according to claim 1, **characterised in that** a single automatic transporting system (8, 108) is intended to supply the at least one order-picking location (4, 104) with order-picking containers (5, 105) and to remove the said order-picking containers (5, 105) therefrom.

3. Order-picking station according to claim 2, **characterised in that** the automatic transporting system (8, 108) is intended to supply the storage locations (6, 106) with storage containers (7, 107) and/or to remove the said storage containers (7, 107) therefrom.

4. Order-picking station according to claim 2 or 3, **characterised in that** the automatic transporting system (8, 108) is designed to supply the at least one order-picking location (4, 104) and the storage locations (6, 106) with containers (5, 7; 105, 107), and to remove the said containers (5, 7; 105, 107) therefrom, from the side remote from the working location (2, 102).

5. Order-picking station according to claim 4, **characterised in that** the automatic transporting system (8, 108) has a container-transporting vehicle (9, 109) which is capable of moving along routes in the form of part of a circle (10, 110).

6. Order-picking station according to claim 5, **characterised in that** a conveyor (11, 111) is intended to supply the container-transporting vehicle (9, 109) with containers (5, 7; 105, 107) and to remove the said containers (5, 7; 105, 107) therefrom.

7. Order-picking station according to claim 5 or 6, **characterised in that** the container-transporting vehicle (9, 109) is designed to supply the at least one order-picking location (4, 104) and the storage locations (6, 106) with containers (5, 7; 105, 107) and to remove the said containers (5, 7; 105, 107) therefrom.

8. Order-picking station according to one of claims 2 to 7, **characterised in that** buffer storage locations (12, 112) are arranged in the form of part of a circle on the side of the automatic transporting system (8, 108) remote from the working location (2, 102).

9. Order-picking station according to claim 8, **characterised in that** the buffer storage locations (12, 112) are arranged to be concentric to the at least one order-picking location (4, 104) and the storage locations (6, 106).

10. Order-picking station according to claim 8 or 9, **characterised in that** the automatic transporting system (8, 108) is designed to supply the buffer storage locations (12, 112) with containers (5, 7; 105, 107), and to remove the said containers (5, 7; 105, 107) therefrom, from the side adjacent the working location (2, 102).

11. Order-picking station according to one of the foregoing claims, **characterised in that** a base station (114) which is provided with a conveyor (115) of its own for supplying and removing storage and/or order-picking containers (1.5, 107) is provided for the working location (102).

12. Order-picking station according to one of the foregoing claims, **characterised in that** two or more arrangements of locations are arranged above one another.

## Revendications

1. Station de préparation de commandes (1, 100) pour la préparation manuelle de commande d'articles, ladite station comportant un poste de travail (2, 102) pour le préparateur de commandes (3, 103), au moins un poste de préparation de commandes (4, 104) pour le récipient de préparation de commandes (5, 105) à remplir et des postes de réception (6, 106) disposés autour du poste de travail (2, 102) et destinés à des récipients de stockage (7, 107) pour le retrait des articles à préparer, l'au moins un poste de préparation de commandes (4, 104) et les postes de réception (6, 106) des récipients de stockage (7, 107) étant disposés partiellement en cercle autour du poste de travail (2, 102) du préparateur de commandes (3, 103), **caractérisée en ce que** l'au moins un poste de préparation de commandes (4, 104) et les postes de réception (6, 106) sont conformés pour être utilisés au choix comme poste de préparation de commandes (4, 104) ou comme poste de réception (6, 106).

2. Station de préparation de commandes selon la revendication 1, **caractérisée en ce qu'**un unique système de transport automatique (8, 108) est prévu pour amener des récipients de préparation de commandes (5, 105) à l'au moins un poste de préparation de commandes (4, 104) et les retirer de celui-ci.

3. Station de préparation de commandes selon la revendication 2, **caractérisée en ce que** le système de transport automatique (8, 108) est prévu pour amener des récipients de stockage (7, 107) aux emplacements de réception (6, 106) et/ou les retirer de ceux-ci.

4. Station de préparation de commandes selon la revendication 2 ou 3, **caractérisée en ce que** le système de transport automatique (8, 108) est conformé pour amener des récipients (5, 7 ; 105, 107) à l'au moins un poste de préparation de commandes (4, 104) et aux postes de réception (6, 106), et les retirer de ceux-ci, depuis le côté opposé au poste de travail (2, 102).

5. Station de préparation de commandes selon la revendication 4, **caractérisée en ce que** le système de transport automatique (8, 108) comporte un véhicule de transport de récipients (9, 109) qui est apte à se déplacer sur des voies de déplacement (10, 110) partiellement circulaires.

6. Station de préparation de commandes selon la revendication 5, **caractérisée en ce qu'**un transporteur (11, 111) est prévu pour amener des récipients (5, 7 ; 105, 107) au véhicule de transport de récipients (9, 109) et les retirer de celui-ci.

7. Station de préparation de commandes selon la revendication 5 ou 6, **caractérisée en ce que** le véhicule de transport de récipients (9, 109) est conformé pour amener des récipients (5, 7 ; 105, 107) à l'au moins un poste de préparation de commandes (4, 104) et aux postes de réception (6, 106) et les retirer de ceux-ci.

8. Station de préparation de commandes selon l'une des revendications 2 à 7, **caractérisée en ce que** des postes de stockage intermédiaires (12, 112) sont disposés partiellement en cercle du côté du système de transport automatique (8, 108) qui est opposé au poste de travail (2, 102).

9. Station de préparation de commandes selon la revendication 8, **caractérisée en ce que** les postes de stockage intermédiaires (12, 112) sont disposés concentriquement à l'au moins un poste de préparation de commandes (4, 104) et aux postes de réception (6, 106).

10. Station de préparation de commandes selon la revendication 8 ou 9, **caractérisée en ce que** le système de transport automatique (8, 108) est conformé pour amener des récipients (5, 7 ; 105, 107) aux postes de stockage intermédiaires (12, 112), et les retirer de ceux-ci, depuis le côté où se trouve le poste de travail (2, 102).

11. Station de préparation de commandes selon l'une des revendications précédentes, **caractérisée en ce qu'**il est prévu pour le poste de travail (102) une station de base (114) qui est destinée à amener des récipients de stockage et/ou de préparation de commandes (1.5, 107), et les retirer, au moyen de son propre transporteur (115).

12. Station de préparation de commandes selon l'une des revendications précédentes, **caractérisée en ce que** deux agencements de poste ou davantage sont disposés l'un au-dessus de l'autre.
